(19) Europäisches Patentamt
European Patent Office
Office européen des brevets

(11) EP 3 369 754 A1

(12) # EUROPÄISCHE PATENTANMELDUNG

(43) Veröffentlichungstag:
**05.09.2018 Patentblatt 2018/36**

(21) Anmeldenummer: **17159204.1**

(22) Anmeldetag: **03.03.2017**

(51) Int Cl.:
***C08F 257/02*** (2006.01)
***C08F 265/06*** (2006.01)
***G02F 1/00*** (2006.01)
***H01B 1/00*** (2006.01)
***H05B 33/08*** (2006.01)
***H05B 41/392*** (2006.01)
***B60J 3/04*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder:
- **EControl-Glas GmbH & Co. KG**
  **08527 Plauen (DE)**
- **Friedrich-Schiller-Universität Jena (FSU)**
  **07743 Jena (DE)**

(72) Erfinder:
- **Schacher, Felix Helmut**
  **07743 Jena (DE)**
- **Eckardt, Oliver**
  **07743 Jena (DE)**
- **Müller, Axel H.E.**
  **65193 Wiesbaden (DE)**
- **Breuermann, Sven**
  **08527 Plauen (DE)**
- **Jödicke, Dirk**
  **08527 Plauen (DE)**

(74) Vertreter: **Angerhausen, Christoph**
**Boehmert & Boehmert**
**Anwaltspartnerschaft mbB**
**Pettenkoferstrasse 22**
**80336 München (DE)**

(54) **ZUSAMMENSETZUNG ZUM HERSTELLEN EINES POLYMERS, EIN VERFAHREN ZUM HERSTELLEN DES POLYMERS, BESAGTES POLYMER, DIE VERWENDUNG DES POLYMERS SOWIE EINE ELEKTRISCH DIMMBARE VERGLASUNG, DIE DAS POLYMER UMFASST**

(57) Die vorliegende Erfindung betrifft eine Zusammensetzung zum Herstellen eines Polymers, umfassend: a) 20 bis 60 Gew.-%, bezogen auf die Gesamtmenge der Zusammensetzung, zumindest eines Monomers; und b) 30 bis 60 Gew.-%, bezogen auf die Gesamtmenge der Zusammensetzung zumindest eines verzweigten Präpolymers, wobei die Zusammensetzung bei Raumtemperatur und unter Normaldruck flüssig ist, die Verwendung der Zusammensetzung, ein Verfahren zur Herstellung eines Polymers unter Verwendung der Zusammensetzung sowie eine elektrisch dimmbare Verglasung, die das Polymer umfasst.

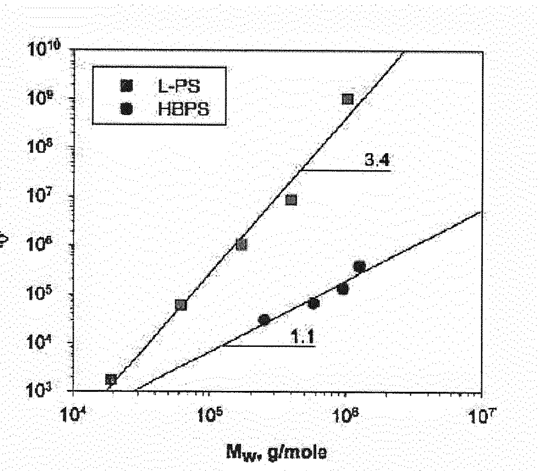


Fig. 1

EP 3 369 754 A1

## Beschreibung

Die vorliegende Erfindung betrifft Zusammensetzung zum Herstellen eines Polymers, ein Verfahren zum Herstellen des Polymers unter Verwendung der Zusammensetzung, besagtes Polymer, die Verwendung des Polymers sowie eine elektrisch dimmbare Verglasung, die das Polymer umfasst.

Die Aushärtung von Monomeren und deren Mischungen (Polymerisation) geht im Allgemeinen mit einer Volumenkontraktion bzw. einer Erhöhung der Materialdichte einher. Diese Änderungen führen vermehrt zu Spannungen im Material und können, speziell im Falle von Verbundgläsern, zu Endprodukten mit Fehlstellen bzw. Bereichen ungenügender Anhaftung führen. Um dieses Problem zu lösen muss der Polymerisationsschrumpf während der Aushärtung reduziert werden.

In nachfolgender Tabelle sind exemplarisch Literaturangaben zum Volumenschrumpf einiger ausgewählter typischer Monomere gelistet.

| **Monomer** | **Volumenschrumpf [%]** |
|---|---|
| Methylmethacrylat[1] | 23 % |
| Ethylmethacrylat[1] | 22 % |
| *n*-Propylmethacrylat[1] | 21 % |
| *n*-Butylmethacrylatat[1] | 23 % |
| Isobutylmethacrylat[1] | 21 % |
| Methylacrylat[1] | 23 % |
| Ethylacrylat[1] | 21 % |
| Vinylchlorid[2] | 34 % |
| Acrylonitril[2] | 31 % |
| Vinylacetat[2] | 21 % |
| Styrol[2] | 15 % |

Eine verbreitete Methode zur Schrumpfreduktion ist der Eintrag von Füllstoffen wie Siliziumdioxid ($SiO_2$) Partikel.[3] Durch das Eigenvolumen des Füllstoffes wird der Schrumpf während der Polymerisation beschränkt. Diese Methode verändert jedoch die physikalischen Eigenschaften des entstehenden Polymers, wie Härte und Biegsamkeit. Ebenso steigt die Viskosität des Stoffgemisches unvorteilhaft an. Des Weiteren steigt beim Zusatz von grobkörnigen Füllstoffen der Verschleiß der Produktionsmaschinen, was zu einer Steigerung der Produktionskosten führt.

So kann der Schrumpf durch Zugabe von Siliziumdioxid-Partikeln auf 2,2 bis 8,8% reduziert werden[3].

Eine alternative Methode zur Verringerung des Schrumpfes nach dem Stand der Technik ist die Zugabe von Präpolymeren zum Monomerengemisch. Präpolymere bestehen größtenteils aus linear aufgebauten Oligomeren oder Polymeren des auszuhärtenden Monomers, welche die Dichte des Monomergemisches erhöhen und somit den Schrumpf nach der Polymerisation erniedrigen können. Je größer hierbei der Anteil des Präpolymers gewählt wird, umso geringer fällt der Schrumpf aus. Jedoch steigt mit Vergrößerung des Molekulargewichts des Präpolymers die Viskosität des Monomergemisches ebenfalls unvorteilhaft an. Dies führt zu Problemen in der Förderung des Gemisches und kann im Extremfall zu einer Gelierung, einer stark eingeschränkten Verarbeitbarkeit und im Extremfall zur Beschädigung von Produktionsanlagen führen. Die resultierende hohe und somit nachteilige Viskosität der Vorpolymerisate machen es in der Praxis letztendlich unmöglich, ein Vorpolymerisat mit den üblichen und in industriellen Maßstäben eingesetzten Füllmethoden zu verwenden. So lässt sich z.B. ein hochviskoses Harz nicht mehr durch kleine Kanülen in den Zwischenraum zwischen zwei Glasplatten pumpen.

Eine weitere Methode, welche häufig zur Verminderung des Polymerschrumpfes nach dem Stand der Technik eingesetzt wird, ist der Einsatz von sogenannten "expanding monomers".[4] Diese bestehen oft aus Ringsystemen, welche durch Ringöffnungspolymerisation verarbeitet werden. Der Vorteil dieser Methode ist es, dass die entstehenden Polymerketten ein größeres Volumen als die Monomere aufweisen, was in der Theorie zu einem positiven Schrumpf (Expansion) des ausgehärteten Polymers führt. Jedoch sind hierfür spezielle Monomere nötig, welche individuell an den Anwendungsbereich angepasst werden müssen und somit nur schwer verfügbar sind. Die Methode der "expanding monomers" ist also keine breit einsetzbare Methode und sie ist an die chemischen Eigenschaften der Monomere und der daraus resultierenden Polymere gebunden. Polyacrylate und Polystyrol lassen sich nicht über die genannte Methodik herstellen.

Ein weiterer Lösungsansatz zur Verringerung des Schrumpfes einer Monomermischung zwischen 2 Glasscheiben besteht aus der partiellen Aushärtung der Monomermischung. Nach kurzzeitiger Aushärtung wurde wiederholt Gießharzmischung zwischen die Glasscheiben injiziert und anschließend vollkommen ausgehärtet. Diese Methodik verringert die Spannungen im Material und verhindert eine Ablösung des Films von der Glasoberfläche. Hierbei muss jedoch ein erheblicher Mehraufwand betrieben werden, da diese partielle Aushärtung nicht automatisierbar und mit einem hohen Aufwand verbunden ist.

Vor dem Hintergrund der aus dem Stand der Technik bekannten Probleme ist es die Aufgabe der vorliegenden Erfindung einer Zusammensetzung zum Herstellen eines Polymers bereitzustellen, die Nachteile des Stands der Technik überwindet, insbesondere beim Übergang von einer flüssigen Monomermischung (= Zusammensetzung) zum ausgehärteten Polymer (= Polymer) eine verringerte Reduktion des Volumens (= Schrumpf, bzw. Polymerisationsschrumpf oder Volumenschrumpf) bei möglichst gleichbleibend niedriger Viskosität aufweist. Ebenso soll eine Zusammensetzung zum Herstellen eines Polymers bereitgestellt werden, wobei sich die Eigenschaften des Polymers während des Aushärtens (Polymerisierens) nicht signifikant verändern.

Ebenso ist es die Aufgabe der vorliegenden Erfindung, ein Polymer bereitzustellen, das Nachteile des Stands der Technik überwindet. Ebenso soll ein Verfahren zur Herstellung des Polymers sowie von Produkten, die das Polymer umfassen, bereitgestellt werden, das Nachteile des Stands der Technik überwinden.

Diese Aufgabe wird gelöst durch eine Zusammensetzung zum Herstellen eines Polymers, umfassend: a) 20 bis 60 Gew.-%, bezogen auf die gesamte Zusammensetzung, zumindest eines Monomers; und b) 30 bis 60 Gew.-%, bezogen auf die gesamte Zusammensetzung, zumindest eines verzweigten Präpolymers, wobei die Zusammensetzung bei Raumtemperatur und unter Normaldruck flüssig ist.

Im Sinne der Erfindung ist ein Polymer ein chemischer Stoff, der aus Makromolekülen besteht. Die Makromoleküle des Polymers sind aus mehreren (bzw. vielen) Struktureinheiten, sogenannten Monomeren, aufgebaut, die durch kovalente Bindung miteinander verbunden sind.

Im Sinne der Erfindung ist ein Monomer ein niedermolekulares, reaktionsfähiges Molekül, das durch Zusammenschluss mit weiteren Monomeren zum Aufbau eines Polymers geeignet ist. Erfindungsgemäß hat ein Monomer, soweit in der Anmeldung nicht anders angegeben, zumindest eine funktionelle Gruppe. Eine funktionelle Gruppe ist hierbei eine Gruppe, die die Polymerisation des Monomers erlaubt. Besonders bevorzugt ist hierbei eine C=C-Doppelbindung als funktionelle Gruppe, durch die eine radikalische Kettenpolymerisation ermöglicht wird. Beispielhaft seien in diesem Zusammenhang die C=C-Doppelbindung einer Vinylgruppe oder die entsprechende C=C-Doppelbindung einer (Alkyl)acrylatgruppe genannt.

Im Sinne der Erfindung bezeichnet der Begriff Präpolymer ein reaktives Oligomer, das zur Herstellung von Polymeren dient. In einer Ausführungsform kann vorgesehen sein, dass das Präpolymer ein verzweigtes Präpolymer ist. Das verzweigte Präpolymer umfasst zumindest eine, vorzugsweise mehrere, Seitenkette(n). In einer weiteren Ausführungsform kann vorgesehen sein, dass die in der erfindungsgemäßen Zusammensetzung enthaltenen Monomere und Präpolymere radikalisch polymerisierbar sind, d.h. radikalisch polymerisierbare Einheiten umfassen. In anderen Worten kann vorgesehen sein, dass die erfindungsgemäße Zusammensetzung eine solche zum Herstellen eines Polymers mittels radikalischer Polymerisation ist. Es kann vorgesehen sein, dass die Zusammensetzung zur Herstellung von Polyacrylaten, Polymethacrylaten, Polystyrolen oder Copolymeren derselben dient.

Im Sinne der Erfindung bezeichnet der Begriff Raumtemperatur eine Temperatur von 20°C. Der Begriff Normaldruck bezieht sich auf einen Druck von 1,01325 bar.

Erfindungsgemäß kann ferner vorgesehen sein, dass die erfindungsgemäße Zusammensetzung weitere Bestandteile, etwa einen Polymerisationsinitiator, zum Beispiel Ergacure 819, ein Lösungsmittel, zum Beispiel Propylencarbonal, oder weitere Zusatzstoffe, etwa Lithiumperchlorat, umfasst.

Darüber hinaus kann vorgesehen sein, dass die erfindungsgemäße Zusammensetzung radikalisch polymerisierbare Vernetzer, beispielswiese Diacrylate, Triacrylate, Tetraacrylate oder ähnliche Verbindungen, enthält.

Erfindungsgemäß ist vorgesehen, dass die in der erfindungsgemäßen Zusammensetzung enthaltenden Bestandteile sich zu einer Gesamtmenge von 100% aufaddieren.

Vorzugsweise ist vorgesehen, dass das Monomer in einer Menge von 25 bis 55 Gew.-%, besonders bevorzugt 29 bis 50 Gew.-%, bezogen auf die gesamte Zusammensetzung, in der Zusammensetzung enthalten. Ebenso ist bevorzugt, dass das verzweigte Präpolymer in einer Menge von 35 bis 55 Gew.-%, besonders bevorzugt 35 bis 50 Gew.-%, bezogen auf die gesamte Zusammensetzung, in der Zusammensetzung enthalten ist. Die Verwendung der bevorzugten Menge(n) an Monomer und/oder Präpolymer führen zu einer besonders niedrigen Viskosität.

Ebenso ist bevorzugt, dass das verzweigte Präpolymer ein Zahlenmittel der Molmasse Mn von 1.000 bis 10.000 g/mol, vorzugsweise 1.500 bis 8.000 g/mol, hat.

Darüber hinaus ist bevorzugt, dass das verzweigte Präpolymer ein Massenmittel der Molmasse aus Mw von 2.000 bis 40.000 g/mol, vorzugsweise 4.000 bis 30.000 g/mol, hat.

Ebenso ist bevorzugt, dass das Präpolymer eine Dispersität von 2 bis 10, vorzugsweise von 2,5 bis 8 hat. Der Begriff Dispersität beschreibt hierbei das Verhältnis von Massenmittel der Molmasse zu Zahlenmittel der Molmasse.

Durch die bevorzugte Wahl des Zahlenmittels der Molmasse und/oder des Massenmittels der Molmasse und/oder der Dispersität des verzweigten Präpolymers konnte ein besonders geringer Schrumpf erreicht werden. Der geringsten Schrumpf konnte durch Kombination der bevorzugten Merkmale erreicht werden.

Ebenfalls kann vorgesehen sein, dass das Präpolymer einen Verzweigungsgrad von 0,4 bis 0,7, in einer weiteren Ausführungsform von 0,5 bis 0,6 hat.

Sowohl das Zahlenmittel der Molmasse als auch das Massenmittel der Molmasse wurde durch Größenausschlusschromatographie (SEC) bestimmt. Für die SEC-Messungen wurde ein Agilent 1200-System mit einer G1310A-Pumpe, einem G1362A-Brechungsindexdetektor und hintereinander geschaltete PSS Gram30 und PSS Gram1000 Säulen mit einem Auftrennvermögen von 374-1.040.000 Da verwendet. Als Lösungsmittel wurde eine Mischung aus N,N-Dimethylacetamid (DMAc) und 5 mmol LiCl eingesetzt. Die Fließgeschwindigkeit betrug 1 mL min-1 und der Säulenofen wurde auf eine Temperatur von 40°C eingestellt. Das System wurde mit Polymethylmethacrylat- und Polystyrol-Standards kalibriert.

Des Weiteren wurde die erfindungsgemäße Zusammensetzung sowie das auf Grundlage der Zusammensetzung hergestellte Polymer durch Kernspinresonanzspektroskopie (NMR) charakterisiert. Für alle aufgenommenen 1H-NMR Spektren wurde ein 300 MHz Bruker Fourier300 Avance Spektrometer bei Raumtemperatur verwendet. Die chemische Verschiebung (in ppm, parts per million) wurde auf das Lösungsmittelsignal bezogen dargestellt. Als Lösungsmittel wurde deuteriertes Chloroform, Tetrahydrofuran (THF) und Dimethylsulfoxid (DMSO) der Firma Deutero verwendet.

Darüber hinaus ist bevorzugt, dass das Monomer ausgewählt ist aus der Gruppe, bestehend aus Methylmethacrylat, Ethylmethacrylat, n-Propylmethacrylat, n-Butylmethacrylat, Isobutylmethacrylat, Methylacrylat, Ethylacrylat, Vinylchlorid, Acrylonitril, Vinylacetat, Styrol, 2-Ethylhexylacrylat, Hydroxyethylacrylat, N-Isopropylacrylamid, N,N-Dimethylaminoethylmethacrylat, N,N-Dimethylaminoethylacrylat, 2-Vinylpyridin, 4-Vinylpyridin oder Mischungen derselben, vorzugsweise n-Butylacrylat und/oder 2-Ethylhexylacrylat und/oder 2-Hydroxyethylacrylat und/oder Styrol. Für die bevorzugten Monomere konnte eine besonders vorteilhafte Beziehung zwischen geringem Schrumpf und niedriger Viskosität beobachtet werden.

Darüber hinaus ist bevorzugt, dass das verzweigte Präpolymer ein verzweigtes Poly(alkyl)acrylat, vorzugsweise verzweigtes Poly-n-butylacrylat, verzweigtes Poly-2-ethylhexylacrylat, verzweigtes Poly(n-butylacrylat-co-2-ethylhexylacrylat) oder Mischungen derselben, verzweigtes Polyacrylat, verzweigtes Polystyrol oder ein Gemisch derselben ist. Durch die Wahl der als bevorzugt beschriebenen Präpolymere konnten besonders geringe Schrumpfeigenschaften bei gleichzeitig niedriger Viskosität beobachtet werden.

In einer weiteren Ausführungsform kann vorgesehen sein, dass die erfindungsgemäßen Präpolymere solche Präpolymere sind, die aus den im Vorangehenden als bevorzugt genannten Monomeren (und/oder ähnlichen Monomeren) hergestellt werden können.

Es ist bevorzugt, dass die Zusammensetzung ferner c) 0,1 bis 2 Gew.-%, bezogen auf die gesamte Zusammensetzung, eines weiteren Monomers, das mindestens zwei polymerisierbare Gruppen hat, umfasst. Durch die Zugabe eines solchen weiteren Monomers, das mehrere funktionelle Gruppen, also Gruppen, die eine Polymerisation ermöglichen, umfasst, konnte der Verzweigungsgrad des Polymers erhöht werden und daher die Aushärtung des Polymers gesteigert werden. In dieser bevorzugten Ausführungsform, in der ein weitere Monomer, das mehrere funktionelle Gruppen hat, in der Zusammensetzung enthalten ist, kann bevorzugt vorgesehen sein, dass das Monomer, das in einer Menge von 20 bis 60 Gew.-%, bezogen auf die gesamte Zusammensetzung, in der Zusammensetzung enthalten ist, genau eine funktionelle Gruppe hat.

Es ist ferner bevorzugt, dass das Präpolymer erhältlich ist durch Reagieren von (a) zumindest einem Monomer mit einer polymerisierbaren Gruppe; (b) zumindest einem Monomer mit mindestens zwei polymerisierbaren Gruppen; und (c) zumindest einem Kettenübertragungsmittel.

In diesem Zusammenhang ist bevorzugt, dass das Reagieren des Monomers mit einer polymerisierbaren Gruppe, des Monomers mit mindestens zwei polymerisierbaren Gruppen und des Kettenübertragungsmittels in Gegenwart eines Polymerisationsinitiators erfolgt.

Besonders bevorzugt ist hierbei, dass das Monomer mit einer polymerisierbaren Gruppe (a) das Monomer mit mindestens zwei polymerisierbaren Gruppen (b) und das Kettenübertragungsmittel (c) in einem Verhältnis von (a) = 1 bis 100, vorzugsweise (a) = 2 bis 70/(b) = 1/(c) = 0,1 bis 10, vorzugsweise (c) = 0,5 bis 6 vorliegen. Das Verhältnis bezieht sich hierbei auf die Stoffmengen. Das (Stoffmengen-)Verhältnis a/b/c ist demnach bevorzugt 1-100/1/0,1-10.

Erfindungsgemäß kann vorgesehen sein, dass das Reagieren der Reagenzien zur Erzeugung des Präpolymers in Gegenwart weiterer Bestandteile, etwa in Gegenwart eines Lösungsmittels eines Polymerisationsinitiators, etwa Irgacure 819, etc. erfolgt.

Irgacure 819 beschreibt hierbei das am Anmeldetag vertriebene Gemisch des entsprechenden Handelsnamens.

Ein erfindungsgemäßes Kettenübertragungsmittel ist hierbei eine Verbindung, die zumindest eine schwache Bindung besitzt, durch welche eine Kettenübertragungsreaktion erleichtert wird. Erfindungsgemäß bevorzugte Kettenübertragungsmittel sind aliphatische Thiole und/oder aromatische Thiole. Besonders bevorzugt ist hierbei die Verwendung von Dodecanthiol als Kettenübertragungsmittel.

Die beschriebene bevorzugte Herstellung des Präpolymers beschreibt das sogenannte "Strathclyde" Verfahren. In diesem werden Monomere mit einer funktionellen Gruppe (etwa Divinylmonomere) und Monomere mit zwei (oder mehreren) funktionellen Gruppen (etwa Divinylmonomere) in Gegenwart eines Kettenübertragungsmittels umgesetzt. Durch Zugabe und Menge des Kettenübertragungsmittels kann die Länge der primären Polymerkette kontrolliert werden. Hierdurch wird ein vollständiges Aushärten des Gemischs unterbunden.

Die der Erfindung zugrunde liegende Aufgabe wird ferner gelöst durch die Verwendung der erfindungsgemäßen Zusammensetzung zur Herstellung eines Dentalkomposits, zur Herstellung eines Glas-Ionomer Zements, zur Herstellung eines schrumpfarmen Acrylat-Klebstoff, zur Herstellung einer schrumpfarmen Acryl-Glasscheibe, zur Herstellung eines passgenauen Acryl-Materials, in der Elektrotechnik oder zur Herstellung einer Glas-Polymer-Glasverbundscheibe, vorzugsweise mit Hilfe der Gießharztechnik.

Ferner wird die der Erfindung zugrunde liegende Aufgabe gelöst durch ein Verfahren zum Herstellen eines Polymers, das Verfahren umfassend: a) Bereitstellen einer erfindungsgemäßen Zusammensetzung; und b) Reagieren des Monomers und des Präpolymers.

Hierbei kann erfindungsgemäß vorgesehen sein, dass das Reagieren von Monomer und Präpolymer in Gegenwart weiterer Bestandteile, beispielsweise eines Lösungsmittels, eines Polymerisationsinitiators, etwa Ergacure 819, etc. erfolgt.

Schließlich wird die der Erfindung zugrundeliegende Aufgabe gelöst durch eine elektrisch dimmbare Verglasung, umfassend ein nach dem erfindungsgemäßen Verfahren erhältliche Polymer.

Elektrisch dimmbare Verglasungen sind geeignet den Energiefluss von außen in ein Gebäude zu regeln und zu steuern. Hierbei wird über einen elektrischen Impuls, z. B. in Form einer geeigneten Spannung, die Verglasung in ihren lichttechnischen Eigenschaften verändert, z. B. Erniedrigung der Lichttransmission von hohen Werten (z. B. 60%) auf niedrige Werte (z. B. 10%) (= Einfärbung) während einer hohen Einstrahlungsdichte von Sonnenlicht und Erhöhung der Lichttransmission von niedrigen Werten (z. B. 10%) auf hohe Werte (z. B. 60%) (= Entfärbung) während einer niedrigen Einstrahlungsdichte von Sonnenlicht.

Ein elektrochromes Element, welches zur Herstellung in einer elektrisch dimmbaren Verglasung benutzt wird, besteht zumeist aus zwei transparenten tafelförmigen Materialien (Glas oder Kunststoff, z. B. Plexiglas oder Polycarbonat), die über eine ionenleitfähige Folie miteinander verbunden (verklebt) sind. Zwischen der ionenleitfähigen Folie und den angrenzenden Oberflächen der transparenten Tafeln befinden sich leitfähige (TCO = transparent conductive oxide) und elektrochrome Beschichtungen (EC 1 und EC 2) in folgender Anordnung:

Glas - TCO - EC 1 - ionenleitfähige Folie - EC 2 - TCO - Glas

Materialien für leitfähige transparente Beschichtungen (TCOs) können die bekannten Systeme sein: Fluor dotiertes Zinnoxid (z. B. PILKINGTON K-GlasN oder PILKINGTON TEC-Glas), ITO (Indium-Zinnoxid), ATO (Antimon-Zinnoxid) oder weitere (z. B. Alumini-um dotiertes Zinkoxid).

Materialien für die elektrochrome Beschichtung (EC 1) können sein: Wolframoxid, Molybdänoxid, Nickeloxid, Iridiumoxid oder Mischungen aus den genannten Metalloxiden.

Materialien für die elektrochrome Beschichtung (EC 2) können sein: Ceroxid, Titanoxid, Vanadiumoxid, Nioboxid, Tantaloxid oder Mischungen aus den genannten Metalloxiden.

Kern eines solchen reversibel schaltbaren elektrochromen Elementes ist ein Ionen-leitfähiges Polymer, das sich zwischen den beiden beschichteten Tafeln befindet und diese somit dauerhaft verklebt. Das Ionen-leitfähiges Polymer hat zusätzlich die Funktion Ladungsträger bereit zu stellen, um über einen elektrischen Spannungsimpuls Ladungsträger von einer elektrochrome Beschichtung (z. B. EC1) auf die andere elektrochrome Beschichtung (z. B. EC2) zu transportieren. Geeignete Ladungsträger von Lithium-Ionen und Wasserstoff-Ionen sein.

Ein derartiges Ionen-leitfähiges Polymer ist als Folie am Markt nicht zu beziehen. Zur Herstellung eines elektrochromes Elementes wird deshalb ausgehend von einer vorbereiteten Mischung aller notwendigen Komponenten - der sog. Monomermischung - diese zwischen zwei vorbereitete Glasplatten gegossen und anschließend durch UV-Strahlung ausgehärtet. Bei der Aushärtung, also vom Übergang der niedrig viskosen flüssigen Phase der Monomermischung zur festen Polymerphase schrumpft das Material. Dieser Volumenschrumpf ist mit ca. 12 % beträchtlich und führt im Glas - Polymer - Glas - Verbundsystem zu mechanischen Spannungen, die sich vor allem an den Ecken und Kanten des Laminates auswirken können. Die mechanischen Spannungen können bei Beanspruchung der Fensterelemente (Temperaturschwankungen über den Tages- und Jahresverlauf) zu mechanischen Ablösungen und somit zu Einschränkungen im Gebrauch führen. Nach bisherigen Erkenntnissen treten die mechanischen Spannungen besonders stark bei Modellscheiben (Dreiecke, Fünfecke, Trapeze, etc.) mit Eckenwinkeln kleiner als 90° auf.

Ionenleitfähige Folien können auf der Basis von modifiziertem Polyvinylbutyral, Polyethylenoxiden, Polyethylenimine oder Polyacrylaten hergestellt werden. Modifizierte Polyvinylbutyral-Folien sind z. B. in den Patentschriften DE

103 27 517 und WO 02/40578 der Firma GESIMAT, modifizierte Polyethylenoxid oder Polyethylenimine sind hinreichend in den Patentschriften FR 2690536, US 5241411 und DE 69213833 der Firma Saint-Gobain beschrieben. Acrylate und andere Polymere sind aus EP 1 283 436 der BASF AG sowie DE 695 28 148 und DE 44 17 219 der FLACHGLAS AG / FLABEG / EControl-Glas und der EP 2093 270 von EControl-Glas bekannt. Ionenleitfähige Folien werden in der Literatur oft auch als polymere Ionenleiter bezeichnet. Beide Namen ("ionenleitfähige Folie" und "polymerer Ionenleiter") sind gleichwertig und gleichbedeutend.

Das erfindungsgemäße Beispiel 1 ist ein Beispiel für einen polymeren Ionenleiter, der sich für eine ionenleitfähige Folie zur Herstellung von schaltbaren Gläsern gemäß oben genanntem Aufbau eignet.

Die vorliegende Erfindung betrifft die Herstellung und die Nutzung eines Harzes, welches beim Übergang von der flüssigen Monomermischung zum ausgehärteten Polymer einen deutlich geringeren Schrumpf als der im Stand der Technik genannten aufweist und gleichzeitig eine niedrige Viskosität besitzt.

In dieser Erfindung wird auch eine neue Art von Füllmaterial (Präpolymer) dargestellt, welche die Eigenschaften des Polymers nach Aushärtung nicht nennenswert beeinträchtigt, den Polymerschrumpf jedoch erheblich verringert, ohne dass sich die Viskosität unvorteilhaft erhöht.

Überraschenderweise wurde durch die Erfinder festgestellt, dass die Verwendung der erfindungsgemäßen Zusammensetzung die Verringerung des Polymerschrumpfes einer Gießharzmischung während des Aushärtungsprozesses (Polymerisation) bewirkt. Durch den Zusatz von verzweigten Präpolymeren, beispielweise Polyacrylaten, welche durch die von Sherrington entwickelte "Strathclyde-Methode" hergestellt werden können, kann der Schrumpf einer Gießharzmischung (Monomergemisch) erheblich gesenkt werden. Hierbei ist zu beachten, dass die Viskosität der Gießharzmischung nur gering im Vergleich zu linearen Präpolymeren vergleichbarer Molmasse ansteigt.

Im Folgenden soll die Erfindung auf der Grundlage besonders bevorzugter Ausführungsformen im Detail beschrieben werden.

Um den Polymerschrumpf eines Polymers während der Aushärtung (Übergang der flüssigen niedrig viskosen Phase der Monomermischung bis zur festen Polymerphase) zu verringern, werden verzweigte Präpolymere zugesetzt. Diese verzweigten Polymere werden durch die von Sherrington[5] entwickelte "Strathclyde-Methode" hergestellt. Hierbei werden Monomere mit (Meth)Acryl- oder Vinylgruppen und mehrfach funktionalisierten Vernetzern (ebenfalls mit (Meth)Acryl- bzw. Vinylgruppen) copolymerisiert. Um eine Gelierung zu verhindern, wird der Monomermischung ein aliphatisches Thiol ($R_4$-SH mit $R_4$ = aliphatic) oder ein aromatisches Thiol ($R_4$-SH mit $R_4$ = aromatic) zugesetzt. Durch Variierung der Komponenten wie z. B. des Thiols, kann das Molekulargewicht des entstehenden verzweigten Polymers eingestellt werden.

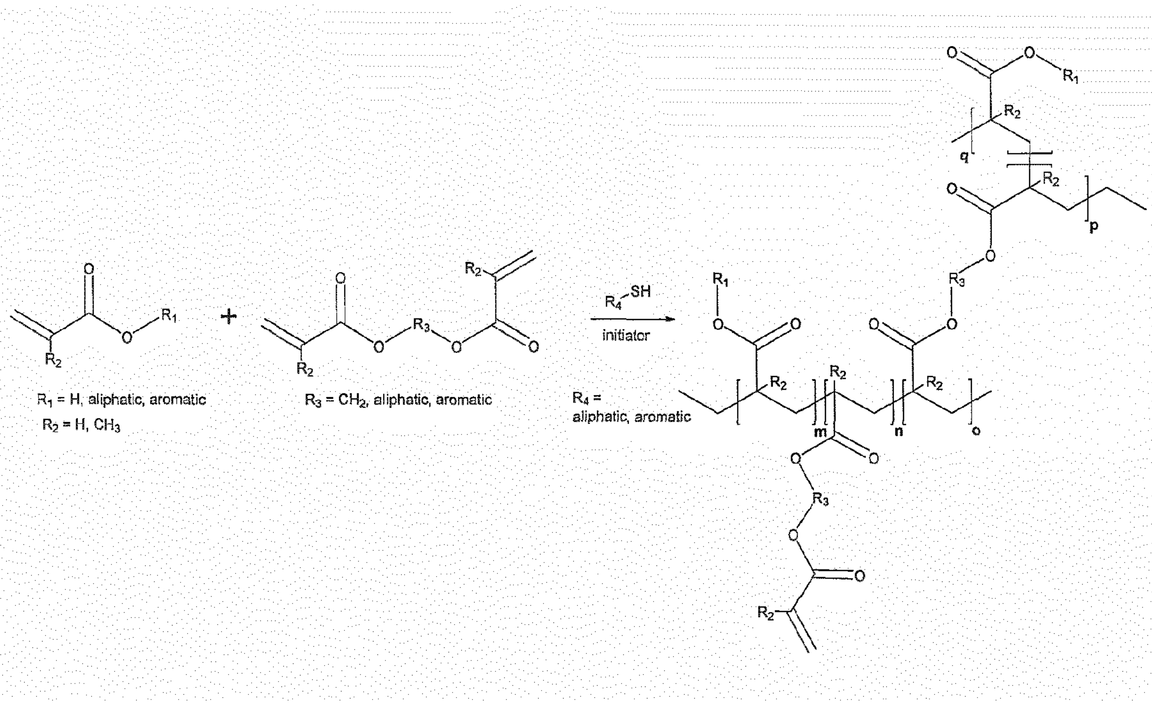

**Schema 1: Herstellung eines verzweigten Polyacrylates nach der Strathclyde-Methodik am Beispiel von Acrylaten (mit $R_2$ = H) und Methacrylaten (mit $R_2$ = $CH_3$); Beispiel 1 mit $R_1$ = n-Bu = $-CH_2-CH_2-CH_2-CH_3$**

Die so hergestellten verzweigten Polymere werden nun als Additive bei der Herstellung von Polymermaterialien zugesetzt. Verwendet man nun verzweigte Polymere (hergestellt z.B. aus n-Butylacrylat nach der Strathclyde-Methode) in Mischung mit monomerem n-Butylacrylat, so kann der Volumenschrumpf während der Polymerisation bis auf 4% herabgesenkt werden, während der Volumenschrumpf bei reinem n-Butylacrylat ca. 11% beträgt (siehe Beispiel 1).

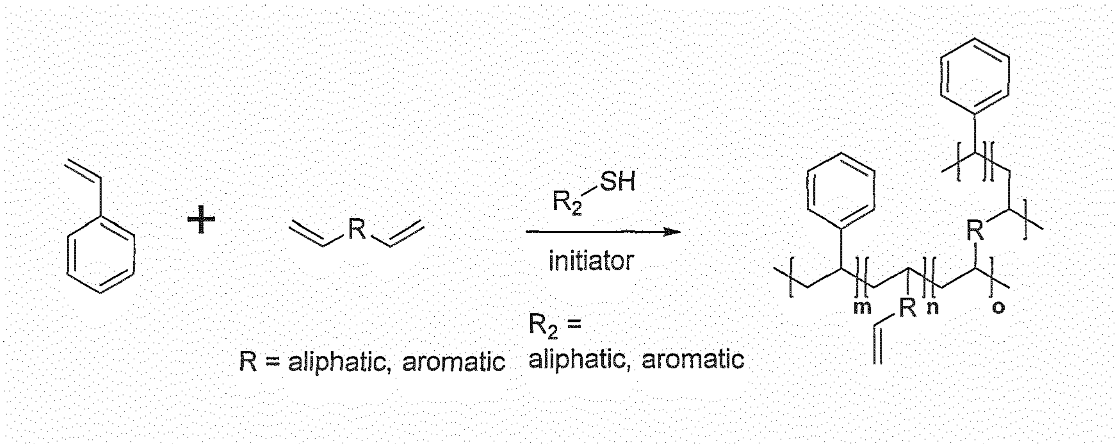


**Schema 2: Herstellung eines verzweigten Polyacrylates nach der Strathelyde-Methodik am Beispiel von Styrol**

Die Viskosität der Monomermischung wird beim Einsatz von verzweigten Polymeren nicht so stark erhöht wie im Vergleich dazu beim Einsatz von linearen Präpolymeren. Dies liegt im Formfaktor $\alpha$ begründet. Die Viskosität einer Polymerlösung wird durch die Mark-Houwink-Gleichung beschrieben

$$(\eta = KM^{\alpha}).$$

Hierbei beschreibt $\eta$ die Viskosität der Polymerlösung und M die molare Masse des gelösten Polymers. K ist ein stoffspezifischer Faktor, ebenso wie $\alpha$, der polymerspezifische Formfaktor. Bei linearen Polymeren liegt dieser Formfaktor bei 0,72. Verzweigte Polymere hingegen besitzen, je nach Verzweigungsgrad, einen niedrigeren Formfaktor. Dies führt zu einer Erniedrigung der Viskosität bei Zusatz von verzweigten Polymeren im Gegensatz zu linearen Polymeren bei gleicher Molmasse. Somit besitzt die verwendete Monomermischung ebenfalls eine geringere Viskosität im Vergleich zu den konventionell verwendeten linearen Präpolymeren.

Ein wesentlicher Aspekt der Erfindung ist daher die Verwendung von verzweigten Präpolymeren als Additive in Monomermischungen zur Reduktion des Polymerschrumpfes, wobei gleichzeitig durch die Verwendung der verzweigten Präpolymere nur ein geringer Viskositätsanstieg eintritt, was die Verarbeitung und Fließfähigkeit des Harzes ermöglicht.

Als ein aussagefähiges Beispiel sei der geringere Anstieg von linear polymerisiertem Polystyrol im Vergleich zum verzweigt polymerisierten Styrol[6] genannt. Dieser wird in der Abbildung 1 gezeigt. In der Abbildung 1 wird die intrinsische Viskosität in Abhängigkeit von der Molaren Masse der Polymere gezeigt. Es fällt auf, dass die Kurve des linearen Polystyrols stärker ansteigt, im Vergleich zum verzweigten Polystyrol.

Figur 1: Unterschied des Viskositätsanstieges von linearen und verzweigten Polystyrol in Abhängigkeit der Molaren Masse; (L-PS = linear polymerisiertes Polystyrol; HBPS = verzweigt polymerisiertes Polystyrol)

Diese Erfindung besitzt zusammenfassend folgende Vorteile:

Der Volumenschrumpf einer Monomermischung während der Aushärtung wird deutlich verringert.

Die Viskosität der Harzmischung bleibt gering und kann somit im industriellen Maßstab eingesetzt und gepumpt werden.

Die Erfindung soll im Folgenden in beispielhafter Weise anhand konkreter Beispiele dargestellt werden. Diese

Beispiele dienen der Veranschaulichung der Erfindung und sind für den Schutzbereich der Erfindung in der vorgetragenen Form nicht begrenzend.

**Ausführungsbeispiele**

Folgende Ausführungsbeispiele werden genannt.

Beispiele 1 - 3: Präparation eines verzweigten Polyacrylates aus einem reinen Monomeren, z. B. n-Butylacrylat; Herstellung eines Polymer-Films mit dem verzweigten Polyacrylat und demselben monomeren Acrylat

Beispiel 4 - 6: Präparation eines verzweigten Polyacrylates aus einem reinen Monomeren, z. B. 2-Ethyl-hexylacrylat; Herstellung eines Polymer-Films mit dem verzweigten Poly-2-ethylhexylacrylat und einem anderen monomeren Acrylat, z.B. n-Butylacrylat

Beispiel 7 - 9: Präparation eines verzweigten Polyacrylates aus einem reinem Monomeren, z. B. n-Butylacrylat; Herstellung eines Films mit dem verzweigten Poly(n-butylacrylat) bzw. Poly(ethyl hexyl acrylat) und einer Mischung verschiedener monomerer Acrylate, z.B. n-Butylacrylat, 2-ethyl hexyl acrylat, 2-hydroxy ethyl acrylat.

Beispiel 10 - 11: Präparation eines verzweigten acrylat-Copolymers aus verschiedenen Monomeren, z. B. n-Butylacrylat und 2-ethyl hexyl acrylat; Herstellung eines Films mit dem verzweigten Poly(n-butylacrylat - co - 2-ethyl hexyl acrylat) und einem anderen monomeren Acrylat, z.B. n-Butylacrylat

Beispiel 12 - 14: Präparation eines verzweigten acrylat-Copolymers aus verschiedenen Monomeren, z. B. n-Butylacrylat und 2-ethyl hexyl acrylat; Herstellung eines Films mit dem verzweigten Poly(n-butylacrylat - co - 2-ethyl hexyl acrylat) und einer Mischung verschiedener monomerer Acrylate, z.B. n-Butylacrylat, ethyl hexyl acrylat, 2-hydroxy ethyl acrylat.

Es bedeuten stets:

- nBA n-Butylacrylat
- EHA 2-ethylhexylacrylat
- HEA hydroxyethylacrylat
- BDDAButandioldiacrylat
- DDT Dodecanthiol
- TPGDA Tripropylenglykoldiacrylat
- DVB Divinylbenzol
- THF Tetrahydrofuran

*Beispiel 1: Präparation eines Poly (n-butyl acrylat) (PnBA) Films*

Das verwendete verzweigte P*n*BA wurde wie folgt hergestellt. 3 kg *n*BA wurden mit 117 g Tripropylenglykoldiacrylat (TPGDA), 395 g Dodecanthiol (DDT) und 1,6 g Irgacure 819 gemischt. Nach 15 min Entgasung/Spülung mit Argon wurde die Mischung für 20 min mit einer 100 W Hg-UV-Lampe bestrahlt. Das erhaltene verzweigte Polymer wies eine Reinheit von 76% (24% unreagiertes *n*BA), eine Molekulargewichtsverteilung von $M_n$=1500 g/mol; $M_w$=4000 g/mol und eine Dispersität von 2,51 auf.

Für die Präparation einer Ionen-leitfähigen Polymerfolie im Sinne der Anwendung in einem elektrochromen Element wurde anschließend eine Gießharzmischung aus 29,05% *n*BA, 54,65% verzweigtes P*n*BA, 13,4% Propylencarbonat, 1,50% Lithiumperchlorat (wasserfrei), 1% 1,4-Butandioldiacrylat und 0,4% Irgacure 819 hergestellt. Diese Gießharzmischung wies eine Viskosität von 9,6 mPas auf. Nach Aushärtung des Films für 30 min unter UV Bestrahlung konnte ein Schrumpf von 4% ermittelt werden. Eine Ähnliche Mischung ohne Zusatz des verzweigten P*n*BA besitzt eine Viskosität von 1,1 mPas und einen Schrumpf nach vollständiger Aushärtung von 11%.

*Beispiel 2:* Präparation eines Poly (ethyl hexyl acrylat) (PEHA) Films

Das verwendete verzweigte P*EHA* wurde wie folgt hergestellt. 10g EHA wurden mit 6,7 g Tripropylenglykoldiacrylat (TPGDA), 22,9 g Dodecanthiol (DDT) und 95 mg Irgacure 819 gemischt. Nach 15 min entgasen mit Argon wurde die Mischung für 20 min mit einer 100 W Hg-UV-Lampe bestrahlt. Das erhaltene verzweigte Polymer wies eine Reinheit

von 85% (15% unreagiertes EHA) und eine Molekulargewichtsverteilung von $M_n$=7600 g/mol; $M_w$=23200 g/mol und eine Dispersität von 3 auf.

Für die Filmpräparation wurden anschließend eine Gießharzmischung aus 49,4% EHA; 36,5% verzweigtes PEHA; 13,4% Propylencarbonat, 0,3% Butandioldiacrylat (BDDA) und 0,4% Irgacure 819 hergestellt. Diese Gießharzmischung wies eine Viskosität von 20 mPas auf. Nach Aushärtung des Films für 30 min unter UV Bestrahlung konnte ein Schrumpf von 5% ermittelt werden. Eine Ähnliche Mischung ohne Zusatz des verzweigten PEHA besitzt eine Viskosität von 2 mPas und einen Schrumpf nach vollständiger Aushärtung von 8%.

*Beispiel 3:* Präparation eines Polystyrol (PS) Films

Das verwendete verzweigte PS wurde wie folgt hergestellt. 100 g Styrol wurden mit 2 g Divinylbenzol (DVB), 16,2 g Dodecanthiol (DDT) und 67 mg Irgacure 819 in 50 mL THF gelöst. Nach 15 min entgasen mit Argon wurde die Mischung für 20 min mit einer 100 W Hg-UV-Lampe bestrahlt. Das erhaltene verzweigte Polymer wies eine Reinheit von 81% (19% unreagiertes Styrol) und eine Molekulargewichtsverteilung von $M_n$=3750 g/mol; $M_w$=29000 g/mol und eine Dispersität von 7,8 auf.

Für die Filmpräparation wurden anschließend eine Gießharzmischung aus 35,9% Styrol; 50% verzweigtes PS; 13,4% Propylencarbonat, 0,3% Divinylbenzol und 0,4% Irgacure 819 hergestellt. Diese Gießharzmischung wies eine Viskosität von 31 mPas auf. Nach Aushärtung des Films für 30 min unter UV Bestrahlung konnte ein Schrumpf von 4% ermittelt werden. Eine Ähnliche Mischung ohne Zusatz des verzweigten PS besitzt eine Viskosität von 2 mPas und einen Schrumpf nach vollständiger Aushärtung von 15%.

*Beispiel 4: Präparation eines Films aus Mischungen*

Für die Filmpräparation wurde eine Gießharzmischung aus 49,4% *n*BA; 36,5% verzweigtes PEHA; 13,4% Propylencarbonat, 0,3% Butandioldiacrylat und 0,4% Irgacure 819 hergestellt. Diese Gießharzmischung wies eine Viskosität von 18 mPas auf. Nach Aushärtung des Films für 30 min unter UV Bestrahlung konnte ein Schrumpf von 6% ermittelt werden. Eine Ähnliche Mischung ohne Zusatz des verzweigten PEHA besitzt eine Viskosität von 1,1 mPas und einen Schrumpf nach vollständiger Aushärtung von 11%.

*Beispiel 5: Präparation eines Films aus Mischungen*

Für die Filmpräparation wurde eine Gießharzmischung aus 49,4% EHA; 36,5% verzweigtes P*n*BA; 13,4% Propylencarbonat, 0,3% Butandioldiacrylat und 0,4% Irgacure 819 hergestellt. Diese Gießharzmischung wies eine Viskosität von 20 mPas auf. Nach Aushärtung des Films für 30 min unter UV Bestrahlung konnte ein Schrumpf von 4% ermittelt werden. Eine Ähnliche Mischung ohne Zusatz des verzweigten P*n*BA besitzt eine Viskosität von 2 mPas und einen Schrumpf nach vollständiger Aushärtung von 8%.

*Beispiel 6: Präparation eines Films aus Mischungen*

Für die Filmpräparation wurde eine Gießharzmischung aus 35,9% 2-Hydroxyethylacrylat (HEA); 50% verzweigtes P*n*BA; 13,4% Propylencarbonat, 0,3% 1,4-Butandioldiacrylat und 0,4% Irgacure 819 hergestellt. Diese Gießharzmischung wies eine Viskosität von 41 mPas auf. Nach Aushärtung des Films für 30 min unter UV Bestrahlung konnte ein Schrumpf von 5% ermittelt werden. Eine Ähnliche Mischung ohne Zusatz des verzweigten P*n*BA besitzt eine Viskosität von 6 mPas und einen Schrumpf nach vollständiger Aushärtung von 14%.

*Beispiel 7: Präparation eines Films aus Mischungen*

Für die Filmpräparation wurde eine Gießharzmischung aus 30% nBA; 20% EHA; 35,9% verzweigtes PEHA; 13,4% Propylencarbonat, 0,3% Butandioldiacrylat und 0,4% Irgacure 819 hergestellt. Diese Gießharzmischung wies eine Viskosität von 23 mPas auf. Nach Aushärtung des Films für 30 min unter UV Bestrahlung konnte ein Schrumpf von 5% ermittelt werden. Eine Ähnliche Mischung ohne Zusatz des verzweigten PEHA besitzt eine Viskosität von 1,8 mPas und einen Schrumpf nach vollständiger Aushärtung von 10%.

*Beispiel 8: Präparation eines Films aus Mischungen*

Für die Filmpräparation wurde eine Gießharzmischung aus 30% *n*BA; 20% EHA; 35,9% verzweigtes P*n*BA; 13,4% Propylencarbonat, 0,3% Butandioldiacrylat und 0,4% Irgacure 819 hergestellt. Diese Gießharzmischung wies eine Viskosität von 21 mPas auf. Nach Aushärtung des Films für 30 min unter UV Bestrahlung konnte ein Schrumpf von

6% ermittelt werden. Eine Ähnliche Mischung ohne Zusatz des verzweigten PEHA besitzt eine Viskosität von 1,3 mPas und einen Schrumpf nach vollständiger Aushärtung von 11%.

*Beispiel 9: Präparation eines Films aus Mischungen*

Für die Filmpräparation wurde eine Gießharzmischung aus 20% *n*BA; 20% EHA; 10% 2-hydroxyethylacrylat (HEA); 35,9% verzweigtes P*n*BA; 13,4% Propylencarbonat, 0,3% Butandioldiacrylat und 0,4% Irgacure 819 hergestellt. Diese Gießharzmischung wies eine Viskosität von 32 mPas auf. Nach Aushärtung des Films für 30 min unter UV Bestrahlung konnte ein Schrumpf von 7% ermittelt werden. Eine Ähnliche Mischung ohne Zusatz des verzweigten P*n*BA besitzt eine Viskosität von 4,2 mPas und einen Schrumpf nach vollständiger Aushärtung von 13%.

*Beispiel 10: Präparation eines Films aus Mischungen*

Das verwendete verzweigte Copolymer (P*n*BA-co-PEHA) wurde wie folgt hergestellt. 10 g nBA wurden mit 4,38 g EHA, 3,9 g Tripropylenglykoldiacrylat (TPGDA), 1,32 g Dodecanthiol (DDT) und 5,4 mg Irgacure 819 gemischt. Nach 15 min entgasen mit Argon wurde die Mischung für 20 min mit einer 100 W Hg-UV-Lampe bestrahlt. Das erhaltene verzweigte Polymer wies eine Reinheit von 81% (19% unreagiertes nBA und EHA) und eine Molekulargewichtsverteilung von $M_n$=2300 g/mol; $M_w$=6000 g/mol und eine Dispersität von 2,6 auf.

Für die Filmpräparation wurde eine Gießharzmischung aus 50% 2-Hydroxyethylacrylat (HEA); 35,9% verzweigtes P*n*BA-co-PEHA; 13,4% Propylencarbonat, 0,3% Butandioldiacrylat und 0,4% Irgacure 819 hergestellt. Diese Gießharzmischung wies eine Viskosität von 24 mPas auf. Nach Aushärtung des Films für 30 min unter UV Bestrahlung konnte ein Schrumpf von 7% ermittelt werden. Eine Ähnliche Mischung ohne Zusatz des verzweigten PnBA-co-PEHA besitzt eine Viskosität von 6 mPas und einen Schrumpf nach vollständiger Aushärtung von 14%.

*Beispiel 11: Präparation eines Films aus Mischungen*

Für die Filmpräparation wurde eine Gießharzmischung aus 50% *n*BA; 35,9% verzweigtes P*n*BA-co-PEHA; 13,4% Propylencarbonat, 0,3% Butandioldiacrylat und 0,4% Irgacure 819 hergestellt. Diese Gießharzmischung wies eine Viskosität von 19 mPas auf. Nach Aushärtung des Films für 30 min unter UV Bestrahlung konnte ein Schrumpf von 6% ermittelt werden. Eine Ähnliche Mischung ohne Zusatz des verzweigten P*n*BA-co-PEHA besitzt eine Viskosität von 1,1 mPas und einen Schrumpf nach vollständiger Aushärtung von 11%.

*Beispiel 12: Präparation eines Films aus Mischungen*

Für die Filmpräparation wurde eine Gießharzmischung aus 30% *n*BA; 20% EHA; 35,9% verzweigtes P*n*BA-co-PEHA; 13,4% Propylencarbonat, 0,3% Butandioldiacrylat und 0,4% Irgacure 819 hergestellt. Diese Gießharzmischung wies eine Viskosität von 21 mPas auf. Nach Aushärtung des Films für 30 min unter UV Bestrahlung konnte ein Schrumpf von 5% ermittelt werden. Eine Ähnliche Mischung ohne Zusatz des verzweigten P*n*BA-co-PEHA besitzt eine Viskosität von 1,8 mPas und einen Schrumpf nach vollständiger Aushärtung von 10%.

*Beispiel 13: Präparation eines Films aus Mischungen*

Für die Filmpräparation wurde eine Gießharzmischung aus 30% nBA; 20% EHA; 35,9% verzweigtes PEHA-co-P*n*BA; 13,4% Propylencarbonat, 0,3% Butandioldiacrylat und 0,4% Irgacure 819 hergestellt. Diese Gießharzmischung wies eine Viskosität von 27 mPas auf. Nach Aushärtung des Films für 30 min unter UV Bestrahlung konnte ein Schrumpf von 6% ermittelt werden. Eine Ähnliche Mischung ohne Zusatz des verzweigten PEHA-co-P*n*BA besitzt eine Viskosität von 1,8 mPas und einen Schrumpf nach vollständiger Aushärtung von 10%.

*Beispiel 14: Präparation eines Films aus Mischungen*

Für die Filmpräparation wurde eine Gießharzmischung aus 20% *n*BA; 20% EHA; 10% 2-hydroxyethylacrylat (HEA); 35,9% verzweigtes PEHA-co-P*n*BA; 13,4% Propylencarbonat, 0,3% Butandioldiacrylat und 0,4% Irgacure 819 hergestellt. Diese Gießharzmischung wies eine Viskosität von 36 mPas auf. Nach Aushärtung des Films für 30 min unter UV Bestrahlung konnte ein Schrumpf von 7% ermittelt werden. Eine Ähnliche Mischung ohne Zusatz des verzweigten PEHA-co-P*n*BA besitzt eine Viskosität von 4,2 mPas und einen Schrumpf nach vollständiger Aushärtung von 13%.

Die Erfindung kann bei allen radikalischen Polymerisationen genutzt werden, bei denen der Schrumpf während der Aushärtung reduziert oder vermieden werden soll:

[1] S. Loshaek, T. G. Fox, J. Am. Chem. Soc. 1953, 75, 3544 - 3550.
[2] F. S. Nichols, R. G. Flowers, Ind. Eng. Chem. 1950, 42, 292 - 295.
[3] Versluis A., Douglas W. H., Cross M., S. R. L., J Dent Res 1996, 75, 871 - 878.
[4] Bailey William J., E. Takeshi, Journal of Polymer Science: Polymer Symposium 1978, 64, 17-26.
[5] N. O'Brien, A. McKee, D. C. Sherrington, A. T. Slark, A. Titterton, Polymer 2000, 41, 6027-6031.
[6] S. B. Kharchenko, R. M. Kannan, J. J. Cernohous, Macromolecules 2003, 36, 399 - 406.

Die in der Beschreibung und den Ansprüchen offenbarten Merkmale können sowohl einzeln als auch in beliebiger Kombination miteinander für die Verwirklichung von Ausführungsformen relevant sein.

**Patentansprüche**

**1.** Zusammensetzung zum Herstellen eines Polymers, umfassend:

a) 20 bis 60 Gew.-%, bezogen auf die gesamte Zusammensetzung, zumindest eines Monomers; und
b) 30 bis 60 Gew.-%, bezogen auf die gesamte Zusammensetzung, zumindest eines verzweigten Präpolymers,

wobei die Zusammensetzung bei Raumtemperatur und unter Normaldruck flüssig ist.

**2.** Zusammensetzung nach Anspruch 1, wobei das verzweigte Präpolymer ein Zahlenmittel der Molmasse $M_n$ von 1.000 bis 10.000 g/mol, vorzugsweise 1.500 bis 8.000 g/mol, hat.

**3.** Zusammensetzung nach Anspruch 1 oder 2, wobei das verzweigte Präpolymer ein Massenmittel der Molmasse aus $M_w$ von 2.000 bis 40.000 g/mol, vorzugsweise 4.000 bis 30.000 g/mol, hat.

**4.** Zusammensetzung nach einem der vorangehenden Ansprüche, wobei das Präpolymer eine Dispersität von 2 bis 10, vorzugsweise von 2,5 bis 8 hat.

**5.** Zusammensetzung nach einem der vorangehenden Ansprüche, wobei das Monomer ausgewählt ist aus der Gruppe, bestehend aus Methylmethacrylat, Ethylmethacrylat, n-Propylmethacrylat, n-Butylmethacrylat, Isobutylmethacrylat, Methylacrylat, Ethylacrylat, Vinylchlorid, Acrylonitril, Vinylacetat, Styrol, 2-Ethylhexylacrylat, Hydroxyethylacrylat, N-Isopropylacrylamid, N,N-Dimethylaminoethylmethacrylat, N,N-Dimethylaminoethylacrylat, 2-Vinylpyridin, 4-Vinylpyridin oder Mischungen derselben, vorzugsweise n-Butylacrylat und/oder 2-Ethylhexylacrylat und/oder 2-Hydroxyethylacrylat und/oder Styrol.

**6.** Zusammensetzung nach einem der vorangehenden Ansprüche, wobei das verzweigte Präpolymer ein verzweigtes Poly(alkyl)acrylat, vorzugsweise verzweigtes Poly-n-butylacrylat, verzweigtes Poly-2-ethylhexylacrylat, verzweigtes Poly(n-butylacrylat-co-2-ethylhexylacrylat) oder Mischungen derselben, verzweigtes Polyacrylat, verzweigtes Polystyrol oder ein Gemisch derselben ist.

**7.** Zusammensetzung nach einem der vorangehenden Ansprüche, ferner umfassend:

c) 0,1 bis 2 Gew.-%, bezogen auf die Gesamtmenge der Zusammensetzung, eines weiteren Monomers, das mindestens zwei polymerisierbare Gruppen hat.

**8.** Zusammensetzung nach einem der vorangehenden Ansprüche, wobei das Präpolymer erhältlich ist durch Reagieren von

a) zumindest einem Monomer mit einer polymerisierbaren Gruppe;
b) zumindest einem Monomer mit mindestens zwei polymerisierbaren Gruppen; und
c) zumindest einem Kettenübertragungsmittel.

**9.** Verwendung einer Zusammensetzung nach einem der vorangehenden Ansprüche zur Herstellung eines Dentalkomposits, zur Herstellung eines Glas-Ionomer Zements, zur Herstellung eines schrumpfarmen Acrylat-Klebstoffs, zur Herstellung einer schrumpfarmen Acryl-Glasscheibe, zur Herstellung eines passgenauen Acryl-Materials, in der Elektrotechnik oder zur Herstellung einer Glas-Polymer-Glasverbundscheibe, vorzugsweise mit Hilfe der Gießharztechnik.

**10.** Verfahren zur Herstellung eines Polymers, das Verfahren umfassend:

a) Bereitstellen einer Zusammensetzung nach einem der Ansprüche 1 bis 8; und
b) Reagieren des Monomers und des Präpolymers.

**11.** Elektrisch dimmbare Verglasung, umfassend ein Polymer, erhältlich nach dem Verfahren gemäß Anspruch 10.

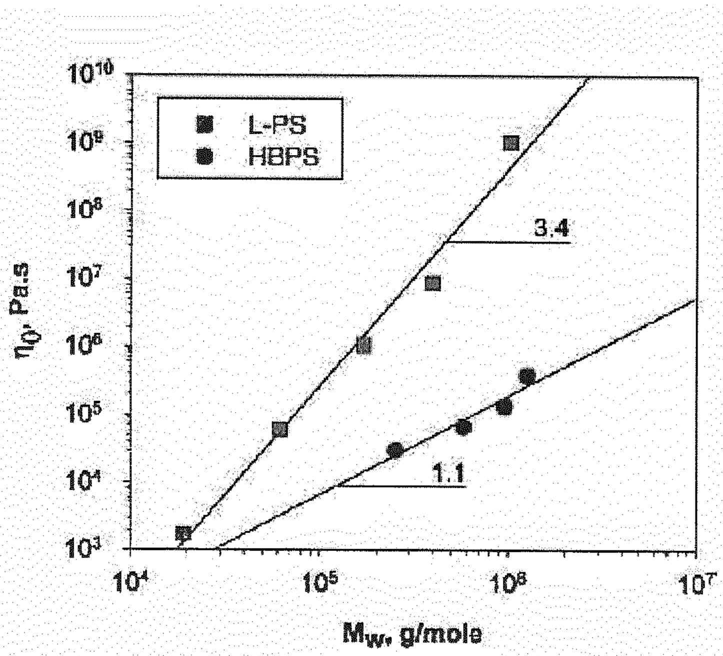
L-PS
HBPS
3.4
1.1
$10^{10}$
$10^9$
$10^8$
$10^7$
$10^6$
$10^5$
$10^4$
$10^3$
$\eta_0$, Pa.s
$10^4$
$10^5$
$10^6$
$10^7$
$M_w$, g/mole

Fig. 1

Europäisches Patentamt
European Patent Office
Office européen des brevets

# EUROPÄISCHER RECHERCHENBERICHT

Nummer der Anmeldung
EP 17 15 9204

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2008 054482 A1 (WACKER CHEMIE AG [DE]) 17. Juni 2010 (2010-06-17)<br>* Absätze [0040], [0043]; Beispiele 1-14 * | 1-10 | INV.<br>C08F257/02<br>C08F265/06<br>G02F1/00<br>H01B1/00<br>H05B33/08<br>H05B41/392<br>B60J3/04 |
| X | WO 2005/085308 A1 (ROEHM GMBH [DE]; SCHMITT BARDO [DE]; HARTMANN PATRIK [DE]) 15. September 2005 (2005-09-15)<br>* Seite 3, Zeile 24 - Zeile 29; Ansprüche 1-24 *<br>* Seite 38, Zeile 24 - Zeile 30 *<br>* Seite 39, Zeile 12 - Zeile 14 * | 1-10 | |
| E | WO 2017/036734 A1 (MAGNA MIRRORS HOLDING GMBH [DE]) 9. März 2017 (2017-03-09)<br>* das ganze Dokument * | 1-11 | |
| A | CN 103 760 713 B (WUXI PROFESSIONAL COLLEGE SCIENCE & TECHNOLOGY) 20. April 2016 (2016-04-20)<br>* das ganze Dokument * | 1-11 | |

RECHERCHIERTE SACHGEBIETE (IPC)
C08F
G02F
H01B
H05B
B60J

Der vorliegende Recherchenbericht wurde für alle Patentansprüche erstellt

1

| Recherchenort | Abschlußdatum der Recherche | Prüfer |
|---|---|---|
| München | 3. August 2017 | Madalinski, Maciej |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 17 15 9204

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2017

| Im Recherchenbericht angeführtes Patentdokument | Datum der Veröffentlichung | Mitglied(er) der Patentfamilie | Datum der Veröffentlichung |
|---|---|---|---|
| DE 102008054482 A1 | 17-06-2010 | DE 102008054482 A1 | 17-06-2010 |
| | | EP 2356159 A1 | 17-08-2011 |
| | | US 2011257297 A1 | 20-10-2011 |
| | | WO 2010066781 A1 | 17-06-2010 |
| WO 2005085308 A1 | 15-09-2005 | CA 2557317 A1 | 15-09-2005 |
| | | CN 1910212 A | 07-02-2007 |
| | | DE 102004011542 A1 | 29-09-2005 |
| | | EP 1723186 A1 | 22-11-2006 |
| | | JP 2007527939 A | 04-10-2007 |
| | | KR 20070020216 A | 20-02-2007 |
| | | US 2007161766 A1 | 12-07-2007 |
| | | WO 2005085308 A1 | 15-09-2005 |
| WO 2017036734 A1 | 09-03-2017 | DE 102015216925 A1 | 09-03-2017 |
| | | WO 2017036734 A1 | 09-03-2017 |
| CN 103760713 B | 20-04-2016 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 10327517
- WO 0240578 A
- FR 2690536
- US 5241411 A
- DE 69213833
- EP 1283436 A
- DE 69528148
- DE 4417219
- EP 2093270 A


### In der Beschreibung aufgeführte Nicht-Patentliteratur


- **S. LOSHAEK ; T. G. FOX.** *J. Am. Chem. Soc.,* 1953, vol. 75, 3544-3550
- **F. S. NICHOLS ; R. G. FLOWERS.** *Ind. Eng. Chem.,* 1950, vol. 42, 292-295
- **VERSLUIS A. ; DOUGLAS W. H. ; CROSS M., S. R. L.** *J Dent Res,* 1996, vol. 75, 871-878
- **BAILEY WILLIAM J. ; E. TAKESHI.** *Journal of Polymer Science: Polymer Symposium,* 1978, vol. 64, 17-26
- **N. O’BRIEN ; A. MCKEE ; D. C. SHERRINGTON ; A. T. SLARK ; A. TITTERTON.** *Polymer,* 2000, vol. 41, 6027-6031
- **S. B. KHARCHENKO ; R. M. KANNAN ; J. J. CERNOHOUS.** *Macromolecules,* 2003, vol. 36, 399-406